# EUROPÄISCHE PATENTSCHRIFT

(11) **EP 1 903 245 B1**
(45) Veröffentlichungstag und Bekanntmachung des Hinweises auf die Patenterteilung: **22.04.2009**
(21) Anmeldenummer: 07017155.8
(22) Anmeldetag: 01.09.2007
(51) Int. Cl.: F16D 65/00, F16D 51/00

(54) **Trommelbremse und Abdeckblech für eine Trommelbremse**
Drum brake and cover for a drum brake
Frein à tambour et tôle de recouvrement pour un frein à tambour

(30) Priorität: 19.09.2006 DE 102006044578
(43) Veröffentlichungstag der Anmeldung: 26.03.2008
(73) Patentinhaber: BPW Bergische Achsen KG, 51674 Wiehl (DE)
(72) Erfinder: Köchl, Hans-Ulrich, 51674 Wiehl (DE)
(74) Vertreter: Christophersen & Partner

(56) Entgegenhaltungen:
- DE-A1- 3 924 114
- US-A- 6 073 734
- US-B1- 6 340 079

## Beschreibung

Die vorliegende Erfindung betrifft eine Trommelbremse für Fahrzeuge, insbesondere Schwerlastfahrzeuge, mit einer fahrzeuginnenseitig durch ein Abdeckblech geschlossenen Bremstrommel. Ferner betrifft die Erfindung ein derartiges Abdeckblech.

Bei bekannten Trommelbremsen wird die fahrzeuginnenseitige Öffnung der Bremstrommel gegenüber den im Fahrbetrieb auftretenden Verunreinigungen, etwa Staub, Schmutzwasser, Steinen usw. über ein am Bremsträger der Trommelbremse festgelegtes Abdeckblech abgedichtet. Aus der DE 595 02 143 C5 ist ein Abdeckblech bekannt, das an dem starr an der Fahrzeugachse befestigten Bremsträger im Bereich der Bremsbackenlagerzapfen und im Bereich des Bremsnockenwellenlagers verschraubt ist.

Als nachteilig bei den genannten Trommelbremsen hat es sich erwiesen, dass der Herstellungs- und Montageaufwand des Abdeckblechs auf Grund der verschiedenen Verschraubungen mit dem Bremsträger oder anderen achsfesten Fahrwerksteilen verhältnismäßig hoch ist, da Gewindebohrungen für die Befestigungsschrauben am Bremsträger angebracht werden müssen und bei der Montage die entsprechenden Schrauben eingeschraubt und angezogen werden müssen.

Bekannt sind auch bereits geteilte Abdeckbleche für Bremstrommeln, zum Beispiel aus der US 6,340,079 und der US 6,073,734. Die Fixierung der beiden Abdeckhälften erfolgt auch hier mittels Verschraubungen, wobei mittels separater oder and den Abdeckhälften angeformter Schellen die beiden Abdeckhälften gegeneinander gezogen und so fixiert werden.

Der vorliegenden Erfindung liegt die Aufgabe zu Grunde, eine Trommelbremse und ein Abdeckblech bereit zu stellen, die sich durch eine gegenüber dem Stand der Technik vereinfachte Herstellung und Montage auszeichnet.

Ausgehend von dieser Aufgabenstellung wird eine Trommelbremse mit den Merkmalen des Anspruchs 1 und ferner ein Abdeckblech für die fahrzeuginnere Abdeckung einer Fahrzeug-Trommelbremse mit den Merkmalen des Anspruchs 8 vorgeschlagen.

Mit Hilfe dieser Ausgestaltung lässt sich der Herstellungs- und Montageaufwand deutlich verringern, da weniger Befestigungsschrauben benötigt werden und sich das Verspannen gegen z.B. ein Lagergehäuse des Bremsnockenwellenlagers durch gegenseitiges Verspannen der Abdeckblechhälften bewerkstelligen lässt.

Eine vorteilhafte Ausgestaltung sieht vor, dass jede Abdeckblechhälfte in eine Nut des Lagergehäuses des Bremsnockenwellenlagers eingreift und gegen das Lagergehäuse des Bremsnockenwellenlagers mittels der Feder, vorzugsweise Zugfeder, verspannt ist.

Die Zugfeder lässt sich auf einfache Weise mittels ihres einen abgebogenen Endes in eine Bohrung in einer der Abdeckblechhälften einhängen, während ihr anderes abgebogenes Ende durch einen von der Teilebene ausgehenden, hakenförmigen Schlitz in der anderen Abdeckblechhälfte geführt und gehalten ist.

Die Montage der Abdeckblechhälften erfolgt somit in der Weise, dass zunächst eine lockere Verschraubung der beiden Abdeckblechhälften mit den jeweiligen Bremsbackenlagerzapfen erfolgt, die mit ihrem einem abgebogenen Ende bereits in die Bohrung eingehängte Zugfeder mit ihrem anderen abgebogenen Ende in den hakenförmigen Schlitz eingeführt wird, so dass die Abdeckblechhälften gegen das Bremsnockenwellenlager verspannt werden und anschließend die Befestigungsschrauben fest gezogen werden.

Im Einzelnen kann das in die Bohrung eingehängte Ende der Zugfeder zweimal um 90° abgebogen sein, wobei sich ein Endschenkel der Feder in Verlängerung der Feder erstreckt, während das im hakenförmigen Schlitz geführte und gehaltene andere Ende wenigstens einmal um 90° abgebogen sein und in wenigstens einer Spiralwindung enden kann.

Der Endschenkel wird bei dieser Ausführungsform senkrecht durch die Bohrung geführt, wonach die Feder um 90° geschwenkt wird und in der Bohrung gehalten ist. An der Spiralwindung kann dann ein Werkzeug angreifen, um den um 90° umgebogenen Bereich durch den hakenförmigen Schlitz zu führen.

Um eine gute Abdichtung nach außen zu erreichen, können die Abdeckblechhälften in der Teilebene überlappend ausgeführt sein.

Die Erfindung wird nachstehend anhand eines in der Zeichnung dargestellten Ausführungsbeispiels des Näheren erläutert. In der Zeichnung zeigen:
- Fig. 1: eine schematische, perspektivische Ansicht auf die fahrzeuginnenseitige Seite der Trommelbremse,
- Fig. 2: eine perspektivische Ansicht eines Teilbereichs der Trommelbremse mit einer Abdeckblechhälfte und
- Fig. 3: eine weitere perspektivische Ansicht einer Abdeckblechhälfte vor der Montage.

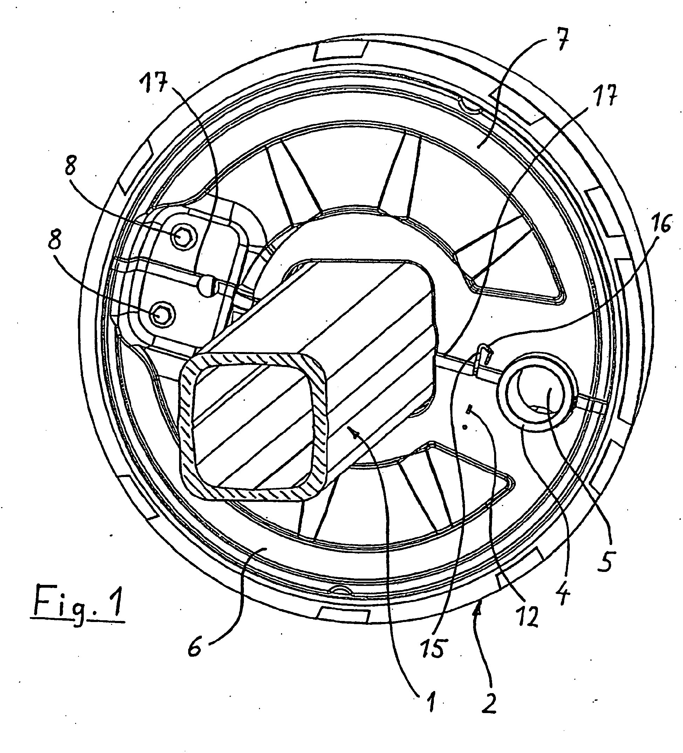

In Fig. 1 ist von einer Trommelbremse die Bremstrommel 2 und ein, einen Achskörper 1 umgreifendes, aus zwei Hälften 6, 7 bestehendes Abdeckblech dargestellt. Die Teilebene 17 zwischen den Abdeckblechhälften 6, 7 verläuft etwa mittig zwischen nicht dargestellten Bremsbackenlagerzapfen und einer Achse einer im Betrieb der Bremsbacken spreizenden Bremsnockenwelle 5, die in einem Lagergehäuse 4, das an einem Bremsträger 3 befestigt ist, gelagert ist.

Jede Abdeckblechhälfte 6, 7 ist an jeweils einem Bremsbackenlagerzapfen mittels einer Befestigungsschraube 8 verschraubt, während entgegengesetzt dazu halbkreisförmige Ausschnitte in den Abdeckblechhälften 6, 7 so bemessen sind, dass sie in eine Ringnut 10 des Bremsnockenwellenlagers 4 passend eingreifen. Denkbar sind hier auch alle anderen formschlüssigen, steckbaren Verbindungen bis hin zu einer Schulteranlage mit einem zusätzlichen, axialen Sicherungselement.

In dieser Stellung werden die Abdeckblechhälften 6, 7 durch ein Spannelement 9 gegeneinander verspannt. Als Spannelement dient hier eine Zugfeder 9, deren zweimal um 90° abgebogene Schenkel 11, 12 durch eine Bohrung in der Abdeckblechhälfte 6 geführt sind, während das andere Ende der Feder 9 mit einem um 90° abgebogenen Schenkel 13 durch einen von der Teilebene 17 wegführenden, hakenförmigen Schlitzbereich 15 geführt und dann in das um mehr als 90° abgewinkelte und damit schon teilweise wieder "zurücklaufende" Ende 16 des Schlitzes eingehängt ist. Die Längsachse der Feder 9 erstreckt sich quer zu der Teilebene 17.

Um die Feder durch den hakenförmigen Schlitz 15, 16 zu führen und zu spannen, ist ein Fortsatz des um 90° abgebogenen Schenkels 13 als Spiralwindung 14 ausgebildet, mit der sich dieses Ende mittels eines Werkzeugs erfassen und in den hakenförmigen Schlitz 15, 16 einführen lässt. Auf diese Weise sind die Abdeckblechhälften 6, 7 in der Ringnut 10 sicher und fest gehalten, und es ist nur noch notwendig, die Befestigungsschrauben 8 fest anzuziehen, wonach der Montagevorgang beendet ist.

Um im Bereich der Teilebene 17 eine Abdichtung der Abdeckblechhälften 6, 7 gegeneinander zu erreichen, sind diese in diesen Bereich sich überlappend ausgebildet.

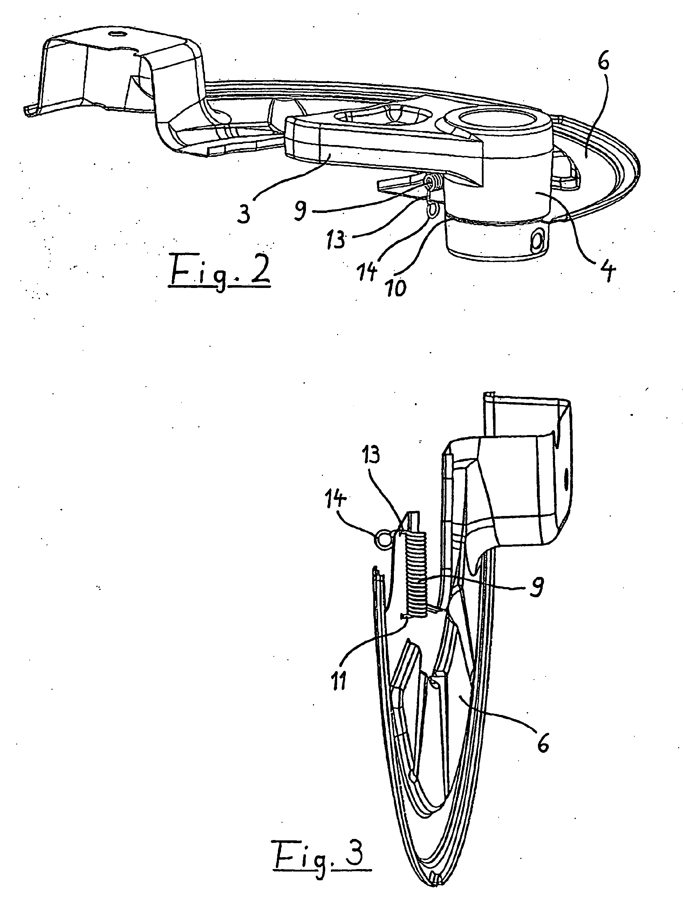

Vor der Montage der Abdeckblechhälften 6, 7 am Bremsträger 2 ist die Feder 9, wie in Fig. 3 gezeigt, mit ihrem einem Ende 11, 12 in die Bohrung der Abdeckblechhälfte eingehängt, während der abgebogene Schenkel 13 des anderen Endes in einem kurzen Schlitz 3 im Bereich der Teilebene 17 eingehängt und dadurch unverlierbar gehalten ist.

Der kurze Schlitz 3 steht dem hakenförmigen Schlitz 15 im montierten Zustand der Abdeckblechhälften 6, 7 deckungsgleich gegenüber. So ist es möglich, die Feder 9 weiterhin bedienbar auf der Innenseite des Abdeckblechs geschützt zu positionieren.

## Patentansprüche

1. Trommelbremse für Fahrzeuge, insbesondere Schwerlastfahrzeuge, mit einer fahrzeuginnenseitig durch ein Abdeckblech (6, 7) geschlossenen Bremstrommel (2), bei der das Abdeckblech in einer Teilebene (17) in zwei Abdeckblechhälften (6,7) geteilt ist, **dadurch gekennzeichnet, dass** sie eine Feder (9) aufweist, und
dass die Abdeckblechhälften (6, 7) durch gegenseitiges Verspannen mittels der Feder (9) an achsfesten Teilen des Fahrzeugs befestigbar sind.

2. Trommelbremse für Fahrzeuge nach Anspruch 1, **dadurch gekennzeichnet, dass** sie ein Lagergehäuse (4) einer Bremsnockenwelle (5) aufweist, und
dass sich beide Abdeckblechhälften (6, 7) in Folge ihres Verspannens gegen das Lagergehäuse (4) abstützen.

3. Trommelbremse für Fahrzeuge nach Anspruch 2,
**dadurch gekennzeichnet,**
**dass** jede Abdeckblechhälfte (6, 7) in eine Nut (10) des Lagergehäuses (4) eingreift und gegen das Lagergehäuse (4) mittels einer als zylindrische Schraubenfeder ausgebildeten Zugfeder (9) verspannt ist.

4. Trommelbremse für Fahrzeuge nach Anspruch 3,
**dadurch gekennzeichnet,**
**dass** die Zugfeder (9) mittels ihres einen abgebogenen Endes (11, 12) in eine Bohrung in einer der Abdeckblechhälften (6) eingehängt ist und ihr anderes, abgebogenes Ende (13, 14) durch einen von der Teilebene ausgehenden, hakenförmigen Schlitz (15, 16) in der anderen Abdeckblechhälfte (7) geführt und gehalten ist.

5. Trommelbremse für Fahrzeuge nach Anspruch 4.
**dadurch gekennzeichnet,**
**dass** das in die Bohrung eingehängte Ende (11, 12) zweimal um 90° abgebogen ist und ein Endschenkel (12) der Feder (9) sich in Verlängerung der Feder (9) erstreckt, und dass das im hakenförmigen Schlitz (15, 16) geführte und gehaltene andere Ende (13, 14) einmal um 90° abgebogen ist und in wenigstens einer Spiralwindung (14) endet.

6. Trommelbremse für Fahrzeuge nach einem der Ansprüche 1 bis 5,
**dadurch gekennzeichnet,**
**dass** sich die Abdeckblechhälften (6, 7) in der Teilebene (17) überlappen.

7. Trommelbremse für Fahrzeuge nach einem der Ansprüche 4 bis 6,
**dadurch gekennzeichnet,**
**dass** das abgebogene Ende (13) der Feder (9) vor der Montage in einem kurzen Schlitz in der Teilebene der Abdeckblechhälfte (6) einhängbar ist.

8. Abdeckblech für die fahrzeuginnere Abdeckung einer Fahrzeug-Trommelbremse, welches in einer Teilebene (17) in zwei Abdeckblechhälften (6, 7) geteilt ist,
**dadurch gekennzeichnet, dass** ein als Feder (9) ausgebildetes Spannelement vorgesehen ist, und
dass die Abdeckblechhälften (6, 7) mittels der Feder (9) gegeneinander verspannbar sind.

9. Abdeckblech nach Anspruch 8,
**dadurch gekennzeichnet,**
**dass** die Feder (9) eine Zugfeder ist, welche mittels ihres einen abgebogenen Endes (11, 12) in eine Bohrung in einer der Abdeckblechhälften (6) eingehängt ist und ihr anderes abgebogenes Ende (13, 14) durch einen von der Teilebene ausgehenden, hakenförmigen Schlitz (15, 16) in der anderen Abdeckbtechhälfte (7) geführt und gehalten ist.

10. Abdeckblech nach Anspruch 9,
**dadurch gekennzeichnet,**
**dass** das in die Bohrung eingehängte Ende (11, 12) zweimal um 90 ° abgebogen ist und ein Endschenkel (12) der Feder (9) sich in Verlängerung der Feder (9) erstreckt, und dass das im hakenförmigen Schlitz (15, 16) geführte und gehaltene andere Ende (13, 14) einmal um 90 ° abgebogen ist und in wenigstens einer Spiralwindung (14) endet.

11. Abdeckblech nach einem der Ansprüche 8 bis 10,
**dadurch gekennzeichnet,**
**dass** sich die Abdeckblechhälften (6, 7) in der Teilebene (17) überlappen.

12. Abdeckblech nach einem der Ansprüche 9 bis 11,
**dadurch gekennzeichnet,**
**dass** das abgebogene Ende (13) der Feder (9) vor der Montage in einem kurzen Schlitz in der Teilebene der Abdeckblechhälfte (6) einhängbar ist.

## Claims

1. Drum brake for vehicles, in particular heavy goods vehicles, comprising a brake drum (2) which is closed towards the inside of the vehicle by a cover plate (6, 7), in which the cover plate is divided in a dividing plane (17) into two cover plate halves (6, 7), **characterised in that** it comprises a spring (9), and **in that** the cover plate halves (6, 7) can be attached to parts of the vehicle which are fixed to the axle by clamping them together by means of the spring (9).

2. Drum brake for vehicles according to claim 1, **characterised in that** it comprises a bearing housing (4) for a brake camshaft (5), and **in that** the two cover plate halves (6, 7) are supported against the bearing housing (4) after being clamped together.

3. Drum brake for vehicles according to claim 2, **characterised in that** each cover plate half (6, 7) engages in a groove (10) of the bearing housing (4) and is clamped against the bearing housing (4) by means of a tension spring (9) designed as a cylindrical helical spring.

4. Drum brake for vehicles according to claim 3, **characterised in that** the tension spring (9) is suspended by means of one bent end (11, 12) in a bore in one of the cover plate halves (6), and its other bent end (13, 14) is guided and held by a hook-shaped slot (15, 16) in the other cover plate half (7), said slot starting from the dividing plane.

5. Drum brake for vehicles according to claim 4, **characterised in that** the end (11, 12) which is suspended in the bore is bent twice through 90° and one end leg (12) of the spring (9) extends in the extension of the spring (9), and **in that** the other end (13, 14) which is guided and held in the hook-shaped slot (15, 16) is bent once through 90° and ends in at least one spiral turn (14).

6. Drum brake for vehicles according to one of claims 1 to 5, **characterised in that** the cover plate halves (6, 7) overlap in the dividing plane (17).

7. Drum brake for vehicles according to one of claims 4 to 6, **characterised in that** the bent end (13) of the spring (9) can be suspended prior to assembly in a short slot in the dividing plane of the cover plate half (6).

8. Cover plate for covering a vehicle drum brake towards the inside of the vehicle, which cover plate is divided in a dividing plane (17) into two cover plate halves (6, 7), **characterised in that** a clamping element designed as a spring (9) is provided, and **in that** the cover plate halves (6, 7) can be clamped against one another by means of the spring (9).

9. Cover plate according to claim 8, **characterised in that** the spring (9) is a tension spring which is suspended by one bent end (11, 12) in a bore in one of the cover plate halves (6), and its other bent end (13, 14) is guided and held by a hook-shaped slot (15, 16) in the other cover plate half (7), said slot starting from the dividing plane.

10. Cover plate according to claim 9, **characterised in that** the end (11, 12) which is suspended in the bore is bent twice through 90° and one end leg (12) of the spring (9) extends in the extension of the spring (9), and **in that** the other end (13, 14) which is guided and held in the hook-shaped slot (15, 16) is bent once through 90° and ends in at least one spiral turn (14).

11. Cover plate according to one of claims 8 to 10, **characterised in that** the cover plate halves (6, 7) overlap in the dividing plane (17).

12. Cover plate according to one of claims 9 to 11, **characterised in that** the bent end (13) of the spring (9) can be suspended prior to assembly in a short slot in the dividing plane of the cover plate half (6).

## Revendications

1. Frein à tambour pour véhicules, en particulier des poids lourds, avec un tambour de frein (2) fermé par une tôle de recouvrement (6, 7) du côté de l'intérieur du véhicule, la tôle de recouvrement étant divisée dans un plan de séparation (17) en deux moitiés de tôle de recouvrement (6, 7), **caractérisé en ce qu'**il présente un ressort (9) et **en ce que** les moitiés de tôle de recouvrement (6, 7) peuvent être fixées sur des parties du véhicule solidaires de l'essieu par serrage mutuel au moyen du ressort (9).

2. Frein à tambour pour véhicules selon la revendication 1, **caractérisé en ce qu'**il présente un boîtier de soutien (4) d'un arbre à came de frein (5) et **en ce que**, par suite de leur serrage mutuel, les deux moitiés de tôle de recouvrement (6, 7) s'appuient contre le boîtier de soutien (4).

3. Frein à tambour pour véhicules selon la revendication 2, **caractérisé en ce que** chaque moitié de tôle de recouvrement (6, 7) s'engage dans une rainure (10) du boîtier de soutien (4) et est serrée contre le boîtier de soutien (4) au moyen d'un ressort de traction (9) conformé en ressort hélicoïdal cylindrique.

4. Frein à tambour pour véhicules selon la revendication 3, **caractérisé en ce que** le ressort de traction (9) est accroché par sa première extrémité recourbée (11, 12) dans un perçage de l'une des moitiés de tôle de recouvrement (6) et son autre extrémité recourbée (13, 14) passe et est tenue dans une fente (15, 16) en forme de crochet partant du plan de séparation dans l'autre moitié de tôle de recouvrement (7).

5. Frein à tambour pour véhicules selon la revendication 4, **caractérisé en ce que** l'extrémité (11, 12) accrochée dans le perçage est recourbée deux fois à 90° et une branche terminale (12) du ressort (9) s'étend dans le prolongement du ressort (9), et **en ce que** l'autre extrémité (13, 14) passant et tenue dans la fente en forme de crochet (15, 16) est recourbée une fois à 90° et se termine par au moins un enroulement en spirale (14).

6. Frein à tambour pour véhicules selon l'une des revendications 1 à 5, **caractérisé en ce que** les moitiés de tôle de recouvrement (6, 7) se chevauchent dans le plan de séparation (17).

7. Frein à tambour pour véhicules selon l'une des revendications 4 à 6, **caractérisé en ce que** l'extrémité recourbée (13) du ressort (9) peut s'accrocher avant le montage dans une courte fente dans le plan de séparation de la moitié de tôle de recouvrement (6).

8. Tôle de recouvrement pour le recouvrement d'un tambour de frein de véhicule du côté de l'intérieur du véhicule, tôle qui est divisée en deux moitiés de tôle de recouvrement (6, 7) dans un plan de séparation (17), **caractérisée en ce qu'**un élément de serrage conformé en ressort (9) est prévu et **en ce que** les moitiés de tôle de recouvrement (6, 7) peuvent être serrées mutuellement au moyen du ressort (9).

9. Tôle de recouvrement selon la revendication 8, **caractérisée en ce que** le ressort (9) est un ressort de traction qui, au moyen de sa première extrémité recourbée (11, 112), est accroché dans un perçage dans l'une des moitiés de tôle de recouvrement (13, 14) et son autre extrémité recourbée (13, 14) passe et est tenue dans une fente (15, 16) en forme de crochet partant du plan de séparation dans l'autre moitié de tôle de recouvrement (7).

10. Tôle de recouvrement selon la revendication 9, **caractérisée en ce que** l'extrémité (11, 12) accrochée dans le perçage est recourbée deux fois à 90° et une branche terminale (12) du ressort (9) s'étend dans le prolongement du ressort (9), et **en ce que** l'autre extrémité (13, 14) passant et tenue dans la fente en forme de crochet (15, 16) est recourbée une fois à 90° et se termine par au moins un enroulement en spirale (14).

11. Tôle de recouvrement selon l'une des revendications 9 à 10, **caractérisée en ce que** les moitiés de tôle de recouvrement (6, 7) se chevauchent dans le plan de séparation (17).

12. Tôle de recouvrement selon l'une des revendications 9 à 11, **caractérisée en ce que** l'extrémité recourbée (13) du ressort (9) peut s'accrocher avant le montage dans une courte fente dans le plan de séparation de la moitié de tôle de recouvrement (6).
